# EUROPÄISCHE PATENTSCHRIFT

(11) **EP 1 279 564 B1**
(45) Veröffentlichungstag und Bekanntmachung des Hinweises auf die Patenterteilung: **12.04.2006**
(21) Anmeldenummer: 02014137.0
(22) Anmeldetag: 01.07.2002
(51) Int. Cl.: B60R 21/16, B60R 21/20

(54) **Sicherheitseinrichtung für Kraftfahrzeuge**
Safety device for motor vehicles
Dispositif de sécurité pour des véhicules automobiles

(30) Priorität: 24.07.2001 DE 10135902
(43) Veröffentlichungstag der Anmeldung: 29.01.2003
(73) Patentinhaber: Benteler Automobiltechnik GmbH, 33104 Paderborn (DE); AUTOLIV DEVELOPMENT AB, 447 83 Vargarda (SE)
(72) Erfinder: Fischer, Jochem, 71672 Marbach (DE); Danner, Thomas, D-85229 Markt Indersdorf (DE); Mayer, Josef, D-85778 Haimhausen (DE); Rade, Rene, D-25421 Pinneberg (DE); Tiefenthaler, Peter, D-80689 München (DE)
(74) Vertreter: Ksoll, Peter

(56) Entgegenhaltungen:
- DE-A- 19 622 231
- DE-A- 19 758 024
- DE-A- 19 809 429
- DE-A- 19 811 181
- US-A- 6 142 509
- US-B1- 6 257 616

## Beschreibung

Die Erfindung betrifft eine Sicherheitseinrichtung für Kraftfahrzeuge gemäß den Merkmalen im Patentanspruch 1.

Zum Schutz von Fahrzeuginsassen eines Kraftfahrzeugs bei einem Seitenaufprall oder Roll-over werden bei modernen Fahrzeugen Seitenairbagsysteme eingesetzt. Die Seitenairbags sind im Bereich des Dachrahmens der Fahrzeugkarosserie angeordnet und werden von einer entfernt vom Airbag angeordneten Druckgasquelle im aktivierten Zustand mit Druckgas befüllt. Die Zuführung des Druckgases zu den Airbags erfolgt über lanzenartige Füllrohre, die entlang des Dachrahmens des Kraftfahrzeugs angeordnet sind. Die Druckgasquelle kann dabei an verschiedenen Positionen des Kraftfahrzeugs angeordnet sein, insbesondere aber im unteren Bereich der A-, B- oder C-Säule oder im Radkastenbereich (DE 197 58 024 A1). Aus diesem Stand der Technik ist es auch bekannt, dass sich Füllrohre unterschiedlicher Konfiguration im wesentlichen über die gesamte Fahrzeuglänge erstrecken, d.h. von der A-Säule bis zur B/D-Säule und im Dachkantenbereich des Kraftfahrzeugs angeordnet sind.

Nachteilig bei diesen Anordnungen ist, dass für die Füll- oder Verbindungsrohre zwischen der Druckgasquelle und dem Airbag zusätzlicher Bauraum im Bereich des Dachrahmens vorhanden sein muss. Weiterhin unterliegen die Verbindungsrohre beim Auslösen der Druckgasquelle hohen Stoßbelastungen. Daher können bestimmte Mindestwandstärken der derzeit eingesetzten Verbindungsrohre nicht unterschritten werden. Andererseits tragen Verbindungsrohre mit größer bemessenen Wandstärken zur Erhöhung des Fahrzeuggesamtgewichts bei, was wiederum eine Erhöhung des Treibstoffverbrauchs und der damit einhergehenden Umweltbelastung zur Folge hat.

Die DE 196 22 231 A beschreibt eine Sicherheitseinrichtung für Kraftfahrzeuge mit einem im Bereich des Dachrahmens der Fahrzeugkarosserie angeordneten Airbag, welcher mit einem von der A-Säule bis zur C-Säule im Bereich des Dachrahmens verlaufenden Verbindungsrohr mit einer entfernt vom Airbag angeordneten Druckgasquelle gekoppelt ist. Das Gas führende Verbindungsrohr ist mit einer Trägerprofilleiste gekoppelt, die als Aussteifung des Dachrahmens konfiguriert sein kann. Dadurch ist das Gas führende Verbindungsrohr fest mit der A-Säule und der C-Säule gekoppelt.

Hiervon ausgehend liegt der Erfindung die Aufgabe zugrunde, eine Sicherheitseinrichtung für Kraftfahrzeuge bereitzustellen, welche die Vorteile eines Seitenairbagsystems aufweist und darüber hinaus zur Erhöhung der passiven Sicherheit der Fahrzeuginsassen beiträgt.

Die Erfindung löst die Aufgabe durch die Merkmale des Patentanspruchs 1.

Das Verbindungsrohr dient als Aussteifung des Dachrahmens. Dadurch kann die Seitensteifigkeit des Dachrahmens deutlich erhöht werden, wobei Steifigkeitserhöhungen im Dachrahmenbereich um 15 % möglich sind.

Die aussteifende Wirkung des Verbindungsrohrs wird nicht allein durch seine Anordnung im Dachrahmenbereich erzielt, sondern durch eine feste Verbindung seiner Enden mit der A-Säule und der C/D-Säule des Kraftfahrzeugs. Erst die Anbindung des Verbindungsrohrs an die A-Säule bzw. C/D-Säule schafft ein Widerlager für die im Bereich des Dachrahmens angreifenden Kräfte.

Mit der erfindungsgemäßen Sicherheitseinrichtung ist es möglich, bei gleichbleibender Steifigkeit im Seitenbereich den Dachrahmen durch geringer dimensionierte Querschnitte leichter zu gestalten und unter Umständen das zusätzliche Gewicht des Verbindungsrohrs zu kompensieren. Dadurch kann bei gleichbleibender Steifigkeit im Dachbereich und gleichbleibendem Fahrzeuggewicht eine sichere Versorgung der Airbags mit Druckgas gewährleistet werden, ohne dass sich das Fahrzeuggewicht erhöht und die oben genannten Folgen nach sich zieht.

Es ist eine Anbindung im unteren Bereich der A-Säule vorgesehen, in welcher das Verbindungsrohr formschlüssig gehaltert ist. Der Formschluss kann beispielsweise dadurch gegeben sein, dass die Anbindung eine rinnenförmige Muldung besitzt, in die sich ein Teilabschnitt des Verbindungsrohrs einschmiegt und somit sowohl in Längsrichtung des Verbindungsrohrs als auch in Umfangsrichtung ein dem Abknicken entgegenwirkender Formschluss ermöglicht wird. Für den Formschluss ist nicht notwendigerweise eine Anbindung erforderlich. Vielmehr ist auch denkbar, dass die A-Säule und/oder C/D-Säule eine Konturierung besitzt, die zumindest abschnittsweise einen Formschluss ähnlich der zuvor beschriebenen Anbindung mit dem Verbindungsrohr ermöglicht.

Das Verbindungsrohr ist im Verlauf der Anbindung abgewinkelt. Dadurch ist ein in Längsrichtung der A-Säule auf das Verbindungsrohr in Richtung der Anbindung wirkende Kraft in die abgewinkelte Anbindung einleitbar. Bei dieser Variante kommt der Gedanke zum Tragen, dass die von dem Dachrahmen auf das Verbindungsrohr wirkende Kraft zwar grundsätzlich durch umfangsseitige Klemmung des Verbindungsrohrs im Bereich der Anbindung in die A-Säule bzw. C/D-Säule als Widerlager einleitbar ist. Eine abgewinkelte Anbindung bzw. ein entsprechend abgewinkeltes Verbindungsrohr hat aber zudem die Wirkung, dass das Verbindungsrohr nicht ohne plastische Verformung durch die Anbindung rutschen kann. Bei entsprechender Ausgestaltung der Anbindung im Bereich der Abwinkelung ist es sogar möglich, auf Klemmelemente weitgehend zu verzichten, da eine Stoßbelastung allein durch die Abwinkelung in der Anbindung auffangbar ist.

Nach Anspruch 2 ist vorgesehen, dass wenigstens ein Teilabschnitt des Verbindungsrohrs im Bereich der A-Säule und/oder C/D-Säule flächig an der A-Säule und/oder C/D-Säule anliegt. Der Vorteil des flächigen oder sogar formschlüssigen Anliegens von wenigstens Teilabschnitten des Verbindungsrohrs an der A-Säule und/oder /D-Säule ist, dass ein Abknicken des Verbindungsrohrs im Falle eines Rollovers verhindert wird. In der Regel greifen Kräfte bei einem Roll-over schlagartig an, wobei ein Abknicken des Verbindungsrohrs dazu führt, dass in die A-Säule eingeleitete Schubkräfte nicht mehr übertragen werden und das Verbindungsrohr nur noch unwesentlich zur Erhöhung der Seitensteifigkeit im Dachbereich beitragen kann.

Während die Anbindung des Verbindungsrohrs an die A-Säule bzw. C/D-Säule wesentlich für die Funktion der erfindungsgemäßen Sicherheitseinrichtung ist, trägt auch eine Befestigung des Verbindungsrohrs an den Dachrahmen im Bereich der B-Säule, wie Anspruch 3 vorsieht, zur Erhöhung der Seitensteifigkeit bei. Insbesondere wird durch die Anbindung im Bereich der B-Säule eine Relativbewegung des Verbindungsrohrs quer zur Fahrtrichtung verhindert und die Schwingneigung des relativ langen Verbindungsrohrs unterdrückt. Eine von den Verbindungsrohren ausgehende akustische Beeinträchtigung wird hierdurch unterdrückt.

Das Verbindungsrohr kann sowohl einstückig hergestellt sein und dabei von der A-Säule bis zur C/D-Säule reichen, aber auch aus zwei Teilstücken gebildet sein (Anspruch 4). Insbesondere kann ein vorderes Teilstück vorgesehen sein, dass sich von der A-Säule bis zur B-Säule erstreckt und ein hinteres Teilstück, das dann von der B-Säule bis zur C/D-Säule verläuft.

Um ein Einknicken des Verbindungsrohrs im Bereich der B-Säule zu vermeiden, sind die beiden Teilstücke im Bereich der B-Säule miteinander verbunden. Die Verbindung muss dabei nicht notwendigerweise gasdurchlässig sein. Es ist auch vorstellbar, dass das vordere Teilstück von einer ersten Druckgasquelle, beispielsweise in der A-Säule und das hintere Teilstück des Verbindungsrohrs von einer weiteren Druckgasquelle, beispielsweise in der C-Säule, versorgt wird.

Dass das hintere Ende des vorderen Teilstücks und das vordere Ende des hinteren Teilstücks des Verbindungsrohrs von einer Halterung an dem Dachrahmen fixiert sind, ist Gegenstand des Anspruchs 5. Durch die Fixierung beider Enden der jeweiligen Teilstücke wird eine potentielle Schwachstelle, nämlich die Verbindung zwischen den Enden der Teilstücke, durch die Anbindung an die Fahrzeugstruktur beseitigt.

In vorteilhafter Ausgestaltung des Erfindungsgedankens ist die Druckgasquelle lösbar an das Verbindungsrohr gekoppelt (Anspruch 6), insbesondere mit diesem verschraubt. Durch die lösbare Anbindung der Druckgasquelle kann das Verbindungsrohr als passives Sicherheitselement in der Kraftfahrzeugstruktur verbleiben.

Praktische Versuche haben gezeigt, dass bei einem quasi statischen Dacheindrücktest, bei welchem der Dachrahmenbereich eines auf einem festen Untergrund stehenden Kraftfahrzeugs in einer Testvorrichtung im Winkel von 25° zu Vertikalen von außen belastet wird, die Seitensteifigkeit im Dachbereich bis zu 15 % gegenüber einem Dachrahmen ohne Rohr erhöht sein kann.

Die Erfindung wird nachfolgend anhand eines in den Zeichnungen dargestellten Ausführungsbeispiels näher erläutert. Es zeigen:
- Figur 1: in Blickrichtung aus dem Fahrzeuginneren einen Ausschnitt eines Seitenstrukturbauteils eines Kraftfahrzeugs von der A-Säule bis zur B-Säule;
- Figur 2: in vergrößerter Darstellung der Figur 1 die Anbindung des Verbindungsrohrs an die A-Säule;
- Figur 3: den Versuchsaufbau für einen quasi statischen Dacheindrücktest und
- Figur 4: ein Kraftwegdiagramm des quasi statischen Dacheindrücktests, wobei über der Verschiebung des Dachrahmens in Millimeter das Verhältnis der aufgebrachten Kraft gegenüber der maximalen Kraft eines Dachrahmens ohne Rohr in Prozent darstellt ist.

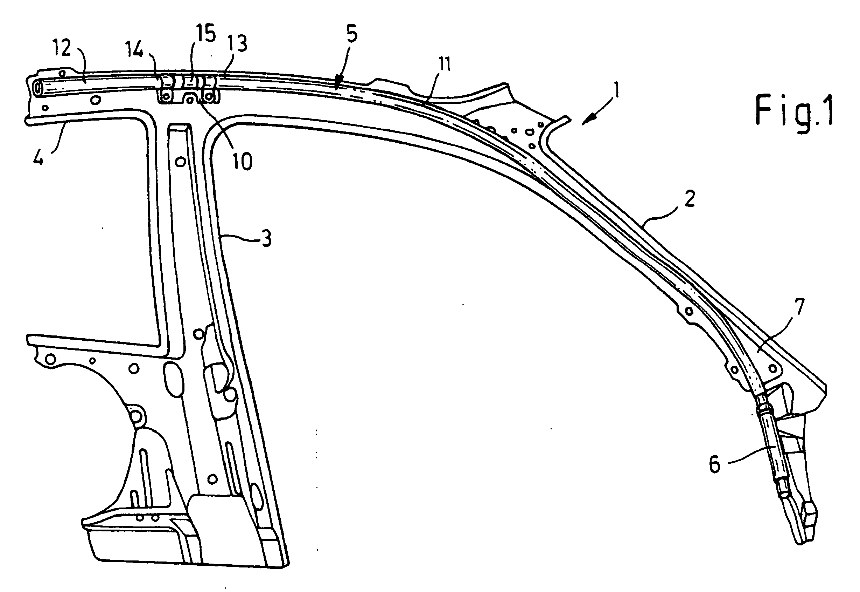

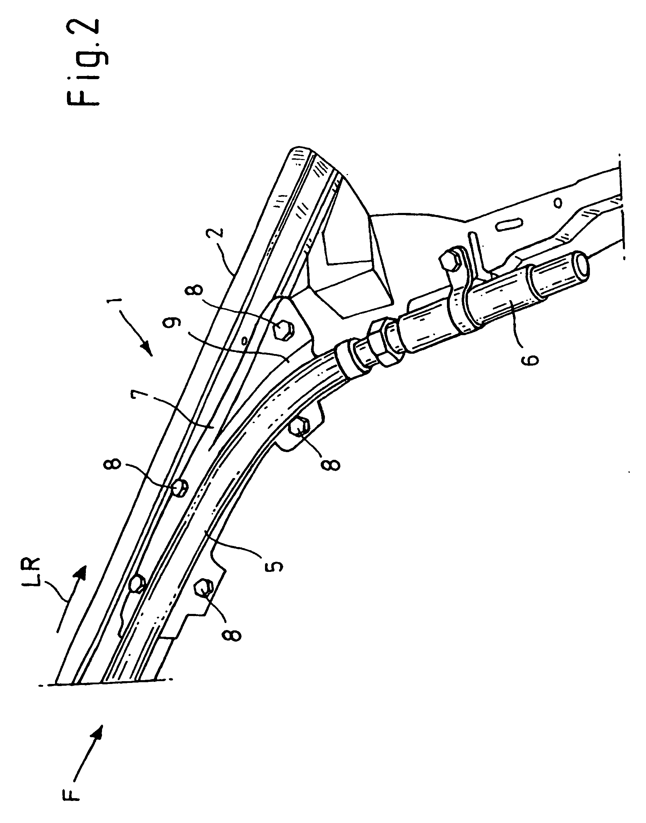

Figur 1 zeigt einen Ausschnitt eines Seitenstrukturbauteils 1 für ein nicht näher dargestelltes Kraftfahrzeug. Das Seitenstrukturbauteil 1 erstreckt sich in dieser Darstellung von der A-Säule 2 über eine B-Säule 3 bis hin zu einer nicht näher dargestellten C- bzw. D-Säule. Die A-Säule 2 mündet in einem Dachrahmen 4, der sich bis zur C/D-Säule erstreckt. Dem Verlauf der A-Säule 2 und des Dachrahmens folgend ist zum Fahrzeuginneren hin ein Verbindungsrohr 5 an der A-Säule 2 und dem Dachrahmen 4 befestigt. Das Verbindungsrohr 5 erstreckt sich dabei in nicht näher dargestellter Weise bis zur C/D-Säule und ist auch dort an der C/D-Säule mit dem Strukturbauteil 1 verbunden. Das Verbindungsrohr 5 hat eine doppelte Funktion: Primär dient es zur Versorgung von im Bereich des Dachrahmens 5 angeordneten Seitenairbags mit Druckgas aus einer Druckgasquelle 6, die in diesem Ausführungsbeispiel im unteren Bereich der A-Säule angeordnet ist (vgl. Figur 2); seine zweite Funktion ist die Aussteifung des Dachrahmens 4 zur Erhöhung der Seitensteifigkeit des Dachrahmens sowie des oberen Abschnitts des gesamten Seitenstrukturbauteils 1. Zur Aufnahme einer sich in Längsrichtung LR der A-Säule 2 an dem Verbindungsrohr 5 angreifenden Kraft F ist im unteren Bereich der A-Säule 2 eine Anbindung 7 plaziert, in der das Verbindungsrohr 5 gehaltert ist (Figur 2). Die Anbindung 7 ist über mehrere Schraubverbindungen 8 mit der A-Säule 2 verschraubt und erstreckt sich etwa über ein Drittel der Länge der A-Säule 2. Die Anbindung 7 ist so konfiguriert, dass das Verbindungsrohr 5 die Anbindung 7 flächig kontaktiert. Dabei ist das Verbindungsrohr 5 am unteren Ende der A-Säule 2 quasi der Kontur des Türrahmens folgend nach unten hin abgewinkelt. Endseitig ist dann die auswechselbare Druckgasquelle 6 schraubtechnisch mit dem Verbindungsrohr 5 verbunden. Die Anbindung 7 ist an die Abwinklung des Verbindungsrohrs 5 angepasst und weist eine entsprechende Konturierung auf. Dabei ist an der Anbindung 7 im Bereich der Abwinklung eine stegartige Überhöhung 9 ausgebildet, an welcher sich der Außenradius des abgewinkelten Verbindungsrohrs 5 abstützt. Durch die Kraft F über das Verbindungsrohrs 5 in die Anbindung 7 eingeleitete Schubkräfte werden dabei von der Überhöhung 9 aufgefangen und über die Schraubverbindungen 8 in die A-Säule 2 des Seitenstrukturbauteils 1 eingeleitet. In nicht näher dargestellter Weise ist das Verbindungsrohr 5 mit einer vergleichbaren Anbindung 7 an der C/D-Säule befestigt.

Wie Figur 1 zeigt, ist das Verbindungsrohr 5 zusätzlich oberhalb der B-Säule 3 über eine mit dem Dachrahmen 4 verschraubte Halterung 10 fixiert. Bei diesem Ausführungsbeispiel ist das Verbindungsrohr 5 in ein vorderes Teilstück 11 und ein hinteres Teilstück 12 gegliedert. Das vordere Teilstück 11 erstreckt sich von der A-Säule 2 über den Dachrahmen 4 bis zur Halterung 10 oberhalb der B-Säule 3. Das untere Teilstück 12 erstreckt sich von der Halterung 10 oberhalb der B-Säule 3 bis zur nicht weiter verdeutlichten C/D-Säule. Die Halterung 10 umfasst dabei das untere Ende 13 des vorderen Teilstücks 11 sowie das vordere Ende 14 des hinteren Teilstücks 12. Die beiden Teilstücke 11 und 12 sind im Bereich der Halterung 10 über ein Verbindungsglied 15 fluidleitend miteinander gekoppelt.

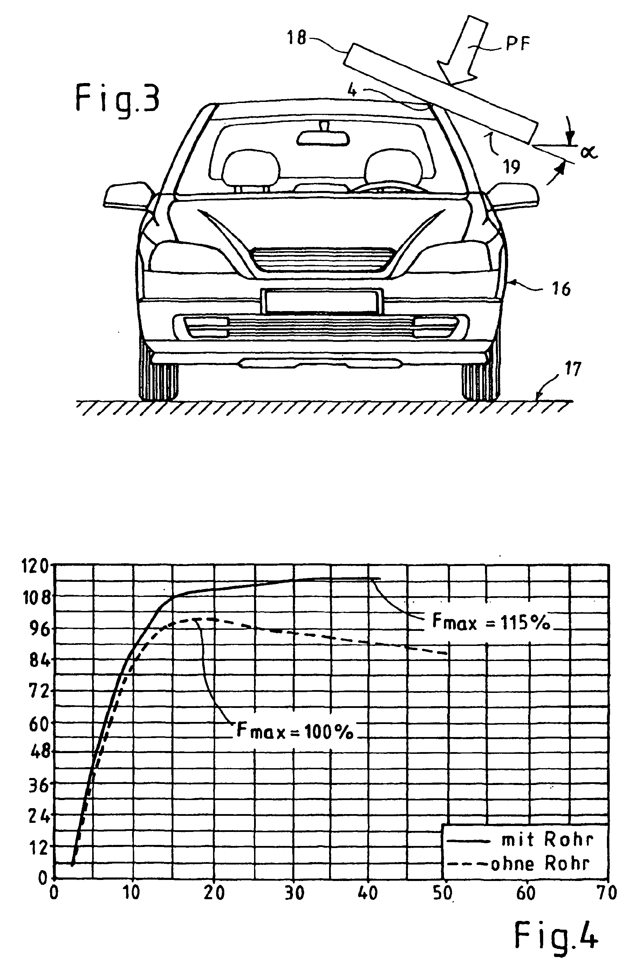

Figur 3 zeigt den Versuchsaufbau für einen quasi statischen Dacheindrücktest. Dabei steht das zu testende Kraftfahrzeug 16 auf einem festen Untergrund 17, während eine Testvorrichtung 18 eine Kraft in Richtung des Pfeils PF auf den Bereich des Dachrahmens 4 des Kraftfahrzeugs 16 ausübt. Die an dem Dachrahmen 4 angreifende Fläche 19 der Testvorrichtung 18 ist dabei um den Winkel α= 25° zur Horizontalen geneigt. Das Ergebnis des Dacheindrücktests mit dieser Versuchsanordnung gibt das in Figur 4 dargestellte Kraftwegdiagramm wieder. Auf der horizontalen Achse des Diagramms ist die Verschiebung des Dachrahmens 4 in Millimetern dargestellt. Die gestrichelte Messkurve bezieht sich auf ein Kraftfahrzeug 16 ohne Verbindungsrohr 5 im Dachrahmen 4 und die durchgezogene Messlinie auf ein Kraftfahrzeug 16 mit einem Verbindungsrohr 5 im Dachrahmen 4. Über der Verschiebung in Millimeter ist auf der vertikalen Achse das Verhältnis der aufgebrachten Kraft in Bezug auf die maximale Kraft bei einem Dachrahmen 4 ohne Verbindungsrohr 5 in Prozent dargestellt. Das Maximum der aufgebrachten Kraft bei einer Anordnung ohne Verbindungsrohr 5 ist in Figur 4 mit Fmax = 100 % bei der gestrichelten Messlinie gekennzeichnet. Das Maximum liegt bei einer Verschiebung von etwa 17,5 mm. Gegenüber der Versuchsanordnung ohne Verbindungsrohr 5 ist bei einem mit einem Verbindungsrohr 5 versehenen Dachrahmen 4 eine höhere Kraft gemessen worden, die bei einer Verschiebung von etwa 40 mm einen Wert von etwa 115 % erreicht. Im Unterschied zu einem Dachrahmen 4 ohne Verbindungsrohr 5 fällt der Kraftverlauf bei relativ niedrigen Eindringtiefen nicht kontinuierlich ab, sondern nimmt leicht aber kontinuierlich zu. Im Ergebnis ist die Seitensteifigkeit im Dachbereich durch das erfindungsgemäße Verbindungsrohr 5 deutlich höher als bei einem Kraftfahrzeug ohne Verbindungsrohr.

### Bezugszeichenaufstellung

- 1 -: Seitenstrukturbauteil
- 2 -: A-Säule
- 3 -: B-Säule
- 4 -: Dachrahmen
- 5 -: Verbindungsrohr
- 6 -: Druckgasquelle
- 7 -: Anbindung
- 8 -: Schraubverbindung
- 9 -: Überhöhung
- 10 -: Halterung
- 11 -: vorderes Teilstück von 5
- 12-: hinteres Teilstück von 5
- 13-: hinteres Ende von 11
- 14-: vorderes Ende von 12
- 15-: Verbindungsglied zwischen 11, 12
- 16-: Kraftfahrzeug
- 17-: Untergrund
- 18-: Testvorrichtung
- 19-: Fläche von 18

- α -: Winkel
- F -: Kraft
- LR -: Längsrichtung von 2
- PF -: Kraftpfeil

## Patentansprüche

1. Sicherheitseinrichtung für Kraftfahrzeuge, umfassend wenigstens einen im Bereich des Dachrahmens (4) der Fahrzeugkarosserie (1) angeordneten Airbag, welcher ein von der A-Säule (2) bis zur C/D-Säule im Bereich des Dachrahmens (4) verlaufendes Verbindungsrohr (5) mit einer entfernt vom Airbag angeordneten Druckgasquelle (6) gekoppelt ist, wobei das Verbindungsrohr (5) als Aussteifung zur Erhöhung der Seitensteifigkeit des Dachrahmens (4) konfiguriert ist und wenigstens mit der A-Säule (2) und der C/D-Säule fest verbunden ist, **dadurch gekennzeichnet, dass** im unteren Bereich der A-Säule (2) eine Anbindung (7) platziert ist, an welcher das Verbindungsrohr (5) formschlüssig gehaltert ist, wobei das Verbindungsrohr (5) im Verlauf der Anbindung (7) abgewinkelt ist, wobei eine in Längsrichtung (LR) der A-Säule (2) auf das Verbindungsrohr (5) in Richtung der Anbindung (5) wirkende Kraft (F) in die abgewinkelte Anbindung (7) einleitbar ist.

2. Sicherheitseinrichtung nach Anspruch 1, **dadurch gekennzeichnet, dass** wenigstens ein Teilabschnitt des Verbindungsrohrs (5) im Bereich der A-Säule (2) und/oder C/D-Säule flächig an der A-Säule (2) und/oder C/D-Säule anliegt.

3. Sicherheitseinrichtung nach Anspruch 1 oder 2, **dadurch gekennzeichnet, dass** das Verbindungsrohr (5) im Bereich der B-Säule (3) mit einer Halterung (10) an dem Dachrahmen (4) befestigt ist.

4. Sicherheitseinrichtung nach einem der Ansprüche 1 bis 3, **dadurch gekennzeichnet, dass** das Verbindungsrohr (5) ein vorderes Teilstück (11) umfasst, das sich von der A-Säule (2) bis zur B-Säule (3) erstreckt, und ein hinteres Teilstück (12), das sich von der B-Säule (3) bis zur C/D-Säule erstreckt, wobei die beiden Teilstücke (11, 12) im Bereich der B-Säule (3) miteinander verbunden sind.

5. Sicherheitseinrichtung nach Anspruch 3 oder 4, **dadurch gekennzeichnet, dass** das hintere Ende (13) des vorderen Teilstücks (11) und das vordere Ende (14) des hinteren Teilstücks (12) von der Halterung (10) an dem Dachrahmen (4) fixiert sind.

6. Sicherheitseinrichtung nach einem der Ansprüche 1 bis 5, **dadurch gekennzeichnet, dass** die Druckgasquelle (6) lösbar an das Verbindungsrohr (5) gekoppelt ist.

## Claims

1. Safety device for motor vehicles, comprising at least one airbag which is arranged in the region of the roof frame (4) of the vehicle body (1) and is coupled by a connecting tube (5), which runs from the A-pillar (2) to the C/D-pillar in the region of the roof frame (4), to a compressed gas source (6) arranged away from the airbag, the connecting tube (5) being configured as a stiffening means to increase the lateral rigidity of the roof frame (4) and being connected fixedly at least to the A-pillar (2) and the C/D-pillar, **characterized in that** a connection (7) on which the connecting tube (5) is secured in a form-fitting manner is placed in the lower region of the A-pillar (2), the connecting tube (5) being angled over the course of the connection (7), and a force (F) which acts in the longitudinal direction (LR) of the A-pillar (2) on the connecting tube (5) in the direction of the connection (5) being introducible into the angled connection (7).

2. Safety device according to Claim 1, **characterized in that** at least a subsection of the connecting tube (5) in the region of the A-pillar (2) and/or C/D-pillar bears in a planar manner against the A-pillar (2) and/or C/D-pillar.

3. Safety device according to Claim 1 or 2, **characterized in that** the connecting tube (5) is fastened in the region of the B-pillar (3) to the roof frame (4) by a securing means (10).

4. Safety device according to one of Claims 1 to 3, **characterized in that** the connecting tube (5) comprises a front subsection (11) which extends from the A-pillar (2) to the B-pillar (3), and a rear subsection (12) which extends from the B-pillar (3) to the C/D-pillar, the two subsections (11, 12) being connected to each other in the region of the B-pillar (3).

5. Safety device according to Claim 3 or 4, **characterized in that** the rear end (13) of the front subsection (11) and the front end (14) of the rear subsection (12) are fixed on the roof frame (4) by the securing means (10).

6. Safety device according to one of Claims 1 to 5, **characterized in that** the compressed gas source (6) is coupled releaseably to the connecting tube (5).

## Revendications

1. Dispositif de sécurité pour véhicules automobiles, comprenant au moins un airbag disposé dans la région du châssis de toit (4) de la carrosserie automobile (1), qu'un tube de liaison (5) s'étendant de la colonne A (2) jusqu'à la colonne C/D dans la région du châssis de toit (4) relie à une source de gaz sous pression (6) disposée en éloignement de l'airbag, le tube de liaison (5) étant configuré sous la forme d'un renfort pour augmenter la rigidité latérale du châssis de toit (4) et étant raccordé solidement au moins avec la colonne A (2) et la colonne C/D,
**caractérisé en ce que** dans la région inférieure de la colonne A (2) est placée un point d'attache (7) sur lequel est assujetti le tube de liaison (5) en engagement positif, le tube de liaison (5) étant coudé sur le tracé su point d'attache (7), tandis qu'une force (F) s'exerçant dans la direction longitudinale (LR) de la colonne A (2) sur le tube de liaison (5) peut être introduite sur le point d'attache courbé (7).

2. Dispositif de sécurité selon la revendication 1,
**caractérisé en ce qu'**au moins un tronçon partiel du tube de liaison (5) dans la région de la colonne A (2) et/ou de la colonne C/D s'appuie à plat sur la colonne A (2) et/ou la colonne C/D.

3. Dispositif de sécurité selon la revendication 1 ou 2,
**caractérisé en ce que** le tube de liaison (5) dans la région de la colonne B (3) est assujetti sur le châssis de toit (4) au moyen d'une fixation (10).

4. Dispositif de sécurité selon une des revendications 1 à 3,
**caractérisé en ce que** le tube de liaison (5) comprend un tronçon avant (11) qui s'étend de la colonne A (2) à la colonne B (3), et un tronçon arrière (12) qui s'étend de la colonne B (3) à la colonne C/D, les deux tronçons (11,12) étant reliés entre eux dans la région de la colonne B (3).

5. Dispositif de sécurité selon la revendication 3 ou 4,
**caractérisé en ce que** l'extrémité arrière (13) du tronçon avant (11) et l'extrémité avant (14) du tronçon arrière (12) sont assujettis sur le châssis de toit (4) par la fixation (10).

6. Dispositif de sécurité selon une des revendications 1 à 5,
**caractérisé en ce que** la source de gaz sous pression (6) est accouplée de façon détachable au tube de liaison (5).
